# EUROPEAN PATENT APPLICATION

(11) **EP 1 466 877 A1**
(43) Date of publication of application: **13.10.2004**
(21) Application number: 02805891.5
(22) Date of filing: 24.12.2002
(51) Int. Cl.: C03C 27/12, B60S 1/02

(54) **WINDSHIELD GLASS**

(30) Priority: 25.12.2001 JP 2001392664; 28.12.2001 JP 2001400244
(71) Applicant: Nippon Sheet Glass Company, Limited, Osaka-shi, Osaka 541-8559 (JP)
(72) Inventor: Noguchi, Tatsuya, Nippon Sheet Glass Co., Ltd., Osaka-shi, Osaka 541-8559 (JP); Kanno, Atsuya, Nippon Sheet Glass Co., Ltd., Osaka-shi, Osaka 541-8559 (JP)
(74) Representative: Dronne, Guy
(86) International application number: PCT/JP2002/013415
(87) International publication number: WO 2003/055821

(57) **Abstract**

A windshield glass including a transparent conductive film and bus bars (41, 42) for feeding electricity thereto. In the windshield glass, at least one film-free portion (51, 511, 512, 52, 521, 522) is formed in the transparent conductive film and is arranged so as to lie in at least a part of a wiper blade stopping area in the windshield glass or is arranged in the vicinity of the area. This configuration relatively increases the amount of electric current passing through a unit area of the transparent conductive film at least in a part of the wiper blade stopping area.

## Description

### TECHNICAL FIELD

The present invention relates to a windshield glass having a heating function provided by passing an electric current using a transparent conductive film. Particularly, the present invention relates to a windshield glass designed with consideration given to icing of a wiper blade, Intelligent Transport Systems (ITS) communications, and uniformity of heat generation.

### BACKGROUND ART

JP7(1995)-309210A discloses a windshield glass for an electric vehicle having a transparent conductive film and bus bars for feeding electricity to this transparent conductive film. When an electric current is passed through this transparent conductive film, a vision area of the windshield glass can be defrosted or defogged. Generally, a windshield glass has a shape with a shorter upper side and a longer lower side. Accordingly, when bus bars for feeding electricity are disposed along the upper side and the lower side of the windshield glass, respectively, a relatively large amount of electric current flows through the transparent conductive film in the vicinity of the upper-side bus bar. Furthermore, the transparent conductive film tends to be overheated in the vicinities of both ends of the upper-side bus bar.

Hence, JP8(1996)-119065A and JP8(1996)-244561A propose to solve the problem of partial overheat by providing a transparent conductive film with an appropriate distribution of sheet resistance. In these publications, local hot regions (heat spots) that appear in the vicinities of both ends of an upper-side bus bar are reduced in size or are eliminated.

JP5(1993)-193355A discloses a windshield glass provided with a conductive coating that heats a main vision area of the windshield glass and a place where a wiper blade is housed or is stopped. In this windshield glass, the wiper blade is deiced with electricity fed from a different bus bar from that used for heating the main vision area.

An increasing number of vehicles have a receiver and a transmitter installed therein for transmitting various information. A transparent conductive film formed on a windshield glass hinders transmission of electromagnetic waves.

JP8(1996)-210042A and JP8(1996)-250915A each disclose a windshield glass provided with an electromagnetic-wave passing portion. In JP8-210042A, the electromagnetic-wave passing portion is provided in the vicinity of the upper side of the windshield glass. This passing portion is arranged in a band filter that is formed inside a nontransparent print and limits the transmittance of visible light. In JP8(1996)-250915A, a number of slits are formed in a transparent conductive film to pass electromagnetic waves. These slits allow electromagnetic waves (microwaves) absorbed by the transparent conductive film to be reradiated. The transparent conductive films disclosed in these two publications are not connected to bus bars used for feeding electricity but are provided exclusively to reflect infrared rays.

As described above, windshields with a transparent conductive film formed thereon have improved infrared reflectivity and can remove fog and the like in the vision area when an electric current is passed therethrough. In the windshields described above, however, heat spots are generated and thereby transmission of electromagnetic waves is hindered, which is a problem.

Conventionally, as is disclosed in JP8(1996)-119065A and JP8(1996)-244561A, the solution proposed to reduce and eliminate heat spots involves fine adjustment of partial thickness of the transparent conductive film and thus was complicated. When the transparent conductive film is provided with a thickness distribution, the color tone of the film may vary in some cases.

In order to transmit electromagnetic waves, a conductive film may be provided with an opening portion as disclosed in JP8(1996)-210042A and JP8(1996)-250915A. However, when the opening portion is provided in a region affecting the field of driver's view, it is possible that a function to be provided by the transparent conductive film cannot be obtained satisfactorily in that portion.

A larger amount of heat is required to be generated in a wiper blade stopping area. However, when a separate bus bar is provided for this purpose as disclosed in JP5(1993)-193355A, a power source requires complicated wiring.

### DISCLOSURE OF THE INVENTION

With the aforementioned situations in mind, the present invention is intended to solve the problem caused by the formation of a transparent conductive film or to provide desirable distribution of heat generation, by forming at least one film-free portion in the transparent conductive film and appropriately arranging the film-free portion.

The present invention proposes to improve a windshield glass including: at least two glass sheets bonded to each other with a thermoplastic resin film interposed therebetween; a transparent conductive film formed on one main surface of one of the glass sheets; and bus bars formed on the one main surface for feeding electricity to the transparent conductive film.

In a first windshield glass of the present invention, the transparent conductive film includes at least one film-free portion in which the transparent conductive film is not formed, with the at least one film-free portion being arranged so as to lie in at least a part of a wiper blade stopping area on the windshield glass or being arranged in the vicinity of the stopping area, and the at least one film-free portion is arranged so that an amount of current passing through a unit area of the transparent conductive film increases at least at a part of the wiper blade stopping area as compared with a case of the absence of the at least one film-free portion.

In this windshield glass, desirable distribution of heat generation for allowing a stopped wiper blade to be heated quickly is achieved through non-uniform distribution of the electric current in the transparent conductive film caused by the film-free portion.

In a second windshield glass of the present invention, the transparent conductive film includes at least one film-free portion in which the transparent conductive film is not formed, with the at least one film-free portion serving as an electromagnetic wave passing portion and being arranged outside an area surrounded by a ceramic print that is formed on one main surface of one of the glass sheets.

In this windshield glass, the film-free portion for passing electromagnetic waves is arranged outside the area (hereinafter, referred to as a "vision area") that affects the field of view and is surrounded by the ceramic print. Accordingly, this film-free portion does not impair the function provided by the transparent conductive film in the vision area.

In a third windshield glass, the transparent conductive film includes a recessed portion formed by recessing a part of an end portion of the transparent conductive film located between the bus bars inwardly from a virtual line joining end portions of the bus bars.

In this windshield glass, the electric current is hindered partially from flowing between the end portions of the bus bars by the recessed portion. When this electric current is limited, for instance, it is possible to reduce the size of heat spots that appear in the vicinities of the end portions of the bus bars and to control the distribution of heat generation.

As described later, it also is possible to concentrate the electric current flowing between the bus bars in the wiper blade stopping area using the film-free portion for passing electromagnetic waves and the recessed portion.

### BRIEF DESCRIPTION OF DRAWINGS

FIG. 1 is a plan view showing an example of an arrangement of film-free portions in a windshield glass according to the present invention.
FIG. 2 is a plan view showing an example of an arrangement of a ceramic print in the windshield glass according to the present invention.
FIG. 3 is a cross-sectional view showing an example of the windshield glass according to the present invention.
FIG. 4 is a diagram showing an example of the relationship between the film-free portions and a wiper blade stopping area.
FIG. 5 is a plan view showing another example of the arrangement of film-free portions in the windshield glass according to the present invention.
FIG. 6 is a cross-sectional partial view of an example of the windshield glass according to the present invention.
FIG. 7 is a plan view showing a further example of the arrangement of film-free portions in the windshield glass according to the present invention.
FIG. 8 is a plan view showing still another example of the arrangement of film-free portions in the windshield glass according to the present invention.
FIG. 9 is a plan view showing yet another example of the arrangement of film-free portions in the windshield glass according to the present invention.
FIG. 10 is a plan view showing a state where only an opening portion for passing electromagnetic waves is formed as a film-free portion in the windshield glass according to the present invention.
FIG. 11 is a plan view showing an example of the relationship between a ceramic print and wiper blade stopping areas as well as the film-free portion in the windshield glass according to the present invention.
FIG. 12 is a cross-sectional view showing another example of a windshield glass according to the present invention.
FIG. 13 is a cross-sectional view showing still another example of a windshield glass according to the present invention.
FIG. 14 is a plan view showing another example of the arrangement of film-free portions in the windshield glass according to the present invention.
FIG. 15 is a plan view showing still another example of the arrangement of film-free portions in the windshield glass according to the present invention.
FIG. 16 is a cross-sectional view showing an example of a film configuration of a transparent conductive film.
FIGs. 17A to 17C are each a diagram showing a result of a test of heat generation in a windshield according to Comparative Example.
FIGs. 18A to 18D are each a diagram showing a result of the heat generation test carried out in Example 1.
FIGs. 19A to 19F are each a diagram showing a result of the heat generation test carried out in Example 2.
FIGs. 20A to 20G are each a diagram showing a result of the heat generation test carried out in Example 3.
FIGs. 21A to 21H are each a diagram showing a result of the heat generation test carried out in Example 4.
FIGs. 22A to 22I are each a diagram showing a result of the heat generation test carried out in Example 5.
FIGs. 23A to 23I are each a diagram showing a result of a heat generation test carried out in Example 6.

### BEST MODE FOR CARRYING OUT THE INVENTION

In the present specification, the "film-free portion" denotes a part where the transparent conductive film is not formed, and includes an opening portion and a recessed portion. Generally, the film-free portion is provided in a virtual current-passing region defined by joining ends of a bus bar located on the upper side to ends of a bus bar located on the lower side, respectively.

Since a windshield glass is designed according to the type of a car, it is possible to specify the wiper blade stopping area by judging from the windshield glass alone even if its section is not indicated clearly on the glass.

In the windshield glass of the present invention, it is preferable that the at least one film-free portion included in the transparent conductive film includes a film-free portion arranged in a non-vision area, and all film-free portions may be arranged in the non-vision area. In this case, when the transparent conductive film is formed at least on the entire surface of the vision area, effects such as heat generation, infrared-ray insulation, etc. that are provided by the transparent conductive film can be obtained over the entire surface.

In some cases, on the boundary between the vision area and a ceramic pattern surrounding the area there may be formed a dot/hole pattern for providing the boundary with a gradation. In this case, the vision area is defined by the innermost side of the dot/hole pattern.

Hereafter, preferred embodiments of the present invention are described with reference to the drawings.

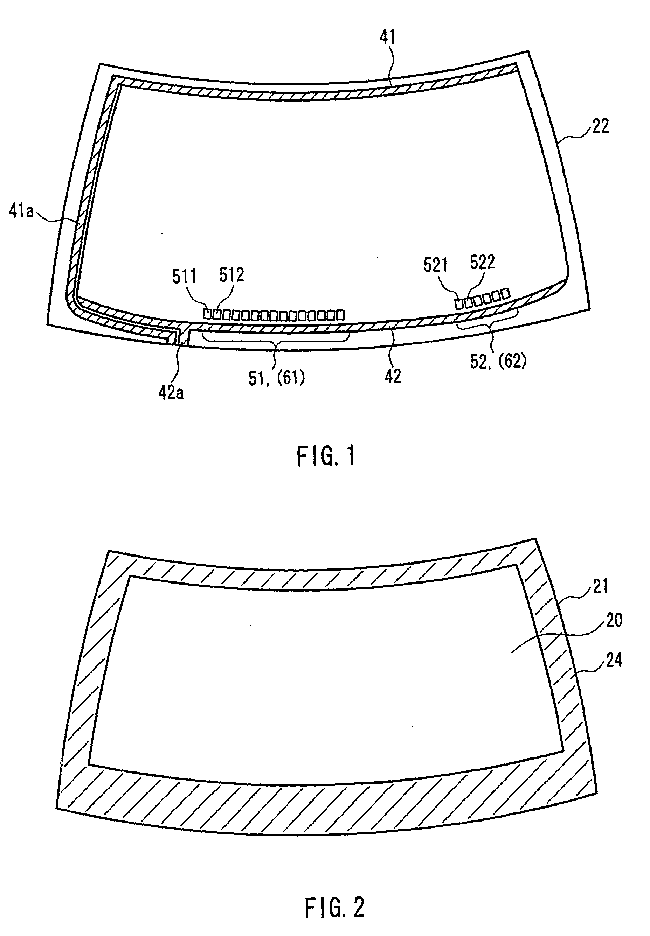

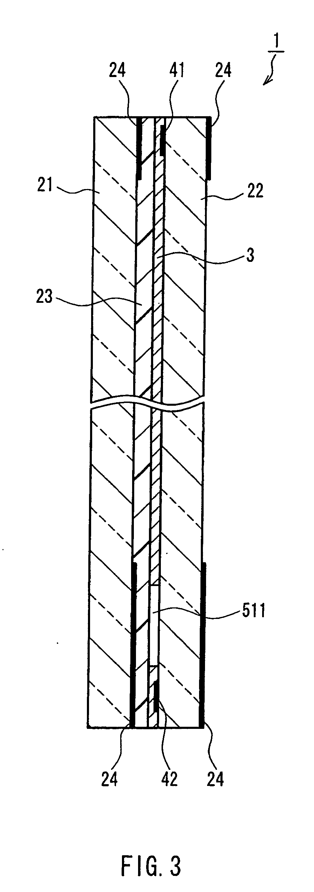

As shown in FIG. 3, in a windshield glass (a windshield laminated glass) 1, a vehicle-exterior side glass sheet 21 and a vehicle-interior side glass sheet 22 are bonded to each other with a thermoplastic resin film (an interlayer) 23. FIG. 1 shows a pattern of bus bars 41 and 42 and a transparent conductive film 3 formed on a vehicle-exterior side surface (a third surface) of the vehicle-interior side glass sheet 22. FIG. 2 shows a pattern of a ceramic print 24 formed on a vehicle-interior side surface (a second surface) of the vehicle-exterior side glass sheet 21. A pattern of a ceramic print 24 formed on a vehicle-interior side surface (a fourth surface) of the vehicle-interior side glass sheet 22 is identical to that shown in FIG. 2. According to common use, glass surfaces are counted sequentially from the vehicle-exterior side and are indicated as a first surface and so on.

In a laminated glass including two glass sheets such as one shown in FIG. 3, it is preferable that the ceramic print is formed at least on the first surface, and the transparent conductive film and bus bars on the third surface. It is preferable that the ceramic pattern 24 that forms a non-vision area and defines a vision area 20 is formed on both surfaces of the outermost and innermost sides of the windshield glass, preferably in the same pattern on both the surfaces, in order to allow the windshield glass 1 to have an excellent appearance.

As shown in FIG. 1, on the surface of the vehicle-interior side glass sheet 22 is formed a first bus bar 41 along the upper side of the glass sheet, a second bus bar 42 along the lower side of the glass sheet, and the transparent conductive film 3 in the region between the bus bars 41 and 42. In the present specification, for convenience, portions that are in contact with the transparent conductive film 3 are referred to as the bus bars 41 and 42, and patterns for feeding electricity to the bus bars 41 and 42 as feed parts 41a and 42a. The feed parts 41a and 42a are connected to feed wires that are not shown in the drawing, at the lower side of the glass sheet. As shown in FIG. 1, when the feed parts 41a and 42a are configured so as to be led out through one port, wiring work is facilitated.

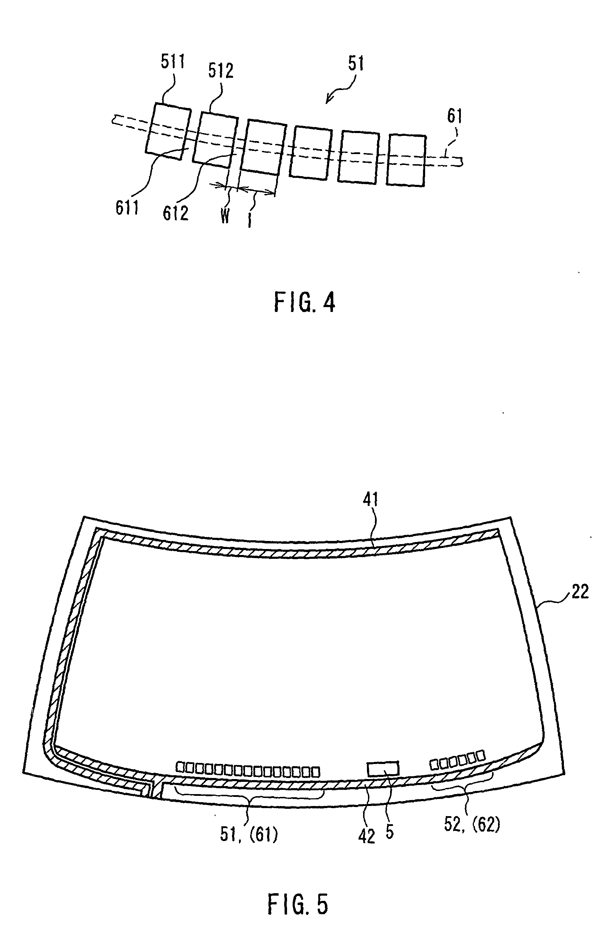

The transparent conductive film 3 is provided with two opening portion groups 51 and 52 arranged in the vicinity of the second bus bar 42. These opening portion groups 51 and 52 are arranged along the longitudinal direction of areas where wiper blades stop (wiper blade stopping areas) 61 and 62. The respective opening portion groups 51 and 52 include a plurality of opening portions 511, 512, ... and 521, 522, ...that are arranged along the longitudinal direction of the wiper blade stopping areas 61 and 62, respectively. At least a part of each of the opening portions 511, 512, ...and at least a part of each of the opening portions 521, 522, ... lie in the wiper blade stopping areas 61 and 62, respectively. In this case, as shown in FIG. 4, the respective opening portions 511, 512, ...cross the wiper blade stopping area 61. Consequently, the transparent conductive film 3 located in the wiper blade stopping area 61 is divided into a comb form, and thereby bridge portions 611, 612, ... are formed in the area 61.

When voltage is applied between the first and second bus bars 41 and 42, an electric current flows through the transparent conductive film 3 and thereby this film is heated. At this time, the film has a high temperature locally in the bridge portions 611, 612, ... left between respective opening portions 511, 512, ..., 521, 522, ... and in portions adjoining the opening portion groups 51 and 52. Wiper blades are not heated directly in the opening portions. However, when the transparent conductive film 3 is made to have high temperature locally, iced wiper blades are deiced faster accordingly.

The respective opening portions 511, 512, ... and 521, 522, ...arranged in one row function sufficiently but they may be arranged in a plurality of rows. When an electric current is made to flow, high temperature regions appear in the bridge portions 611, 612, ...within the opening portion groups 51 and 52 as well as in the vicinities thereof. Hence, the opening portion groups 51 and 52 are not always required to overlap the wiper blade stopping areas 61 and 62 but may be arranged along the vicinities of the areas 61 and 62.

According to a current-carrying test, it was confirmed that in order to heat the whole wiper blades quickly, the ratio (*I*/*W*) of the space *I* between two adjoining bridge portions to the width *W* of a bridge portion is 1 to 3 (see FIG. 4).

As shown in FIG. 2, in the peripheral portion of the vehicle-exterior side glass sheet 21 there is formed a ceramic print 24 in a frame-like form. When it is used in a laminated glass, this print 24 covers the bus bars 41 and 42, the feed parts 41a and 42a, and the opening portion groups 51 and 52. On the whole surface of the vision area 20 surrounded by the ceramic print 24 there is formed the transparent conductive film 3.

The opening portion groups 51 and 52 lie under a wiper device that is in a stopped state. Hence, when it is necessary to transmit electromagnetic waves through the windshield, as shown in FIG. 5, it is convenient to form an opening portion 5 for passing electromagnetic waves in an area other than the wiper blade stopping areas 61 and 62.

The opening portion 5 for passing electromagnetic waves makes it possible to ensure the electromagnetic wave transmission required for ITS communications in Vehicle Information and Communication System (VICS), Electronic Toll Collections (ETC), etc. The ITS communications may be carried out with an ITS communication apparatus installed inside a vehicle so as to be in contact with the opening portion 5. In order to ensure excellent transmission of electromagnetic waves, it is preferable that the opening portion 5 has an area of at least 9 cm². This is the area required to pass electromagnetic waves (5.8 GHz) used for the ETC communications to a degree comparable to that to which an ordinary glass sheet with no transparent conductive film formed thereon transmits them.

As shown in FIG. 5, preferably, the opening portion 5 for passing electromagnetic waves is placed between a pair of wiper blade stopping areas 61 and 62. Further specifically, it is convenient that the opening portion 5 is arranged to cross the line joining ends of the pair of wiper blade stopping areas 61 and 62 located on their sides adjoining each other. With this arrangement, the opening portion 5 allows an electric current to further concentrate in the wiper blade stopping areas 61 and 62.

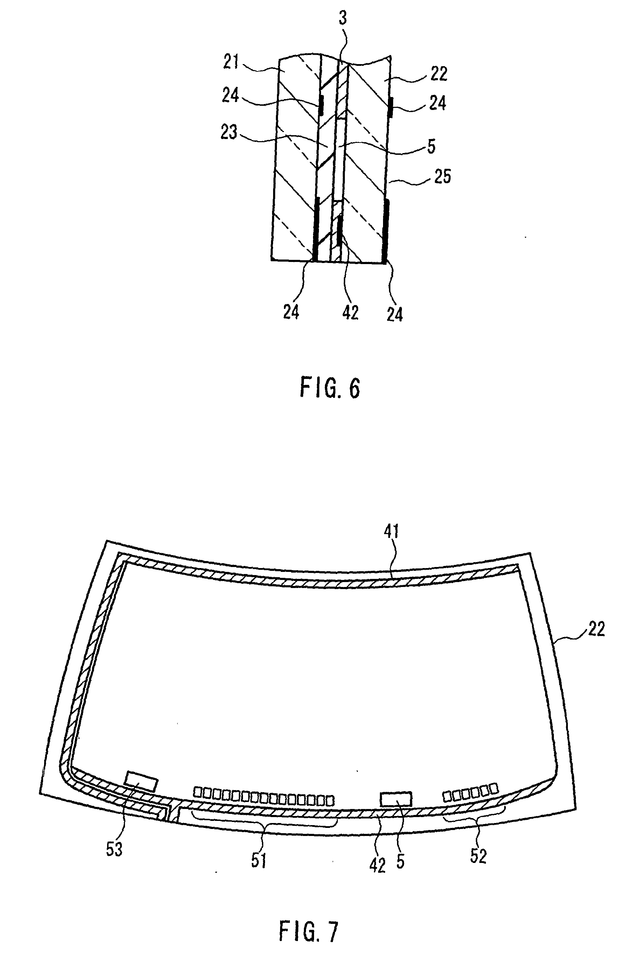

As shown in FIG. 6, an opening portion 25 may be provided for the ceramic print 24 in a place corresponding to that of the opening portion 5 for passing electromagnetic waves. However, when electromagnetic waves to be transmitted are not blocked by the ceramic print 24, for example, when the ceramic print 24 has a composition including no metal component, it is not necessary to provide the ceramic print 24 with the opening portion 25.

As shown in FIG. 7, when an opening portion 53 is formed additionally in an area other than the wiper blade stopping areas 61 and 62, an electric current further concentrates in the wiper blade stopping areas 61 and 62 and consequently, the wiper blades located in stopping places can be heated more efficiently. In order to concentrate the electric current, it is preferable that the opening portions 5 and 53 are arranged so as to cross a virtual line that is obtained by extending the wiper blade stopping areas 61 and 62 along the longitudinal direction thereof as shown in the drawing. Usually, the wiper blade stopping areas 61 and 62 are disposed in the vicinity of the second bus bar 42. Accordingly, the opening portions 5 and 53 often are arranged in the vicinity of the second bus bar 42 located on the lower side, preferably in the vicinity thereof and in places to be covered with the ceramic print 24.

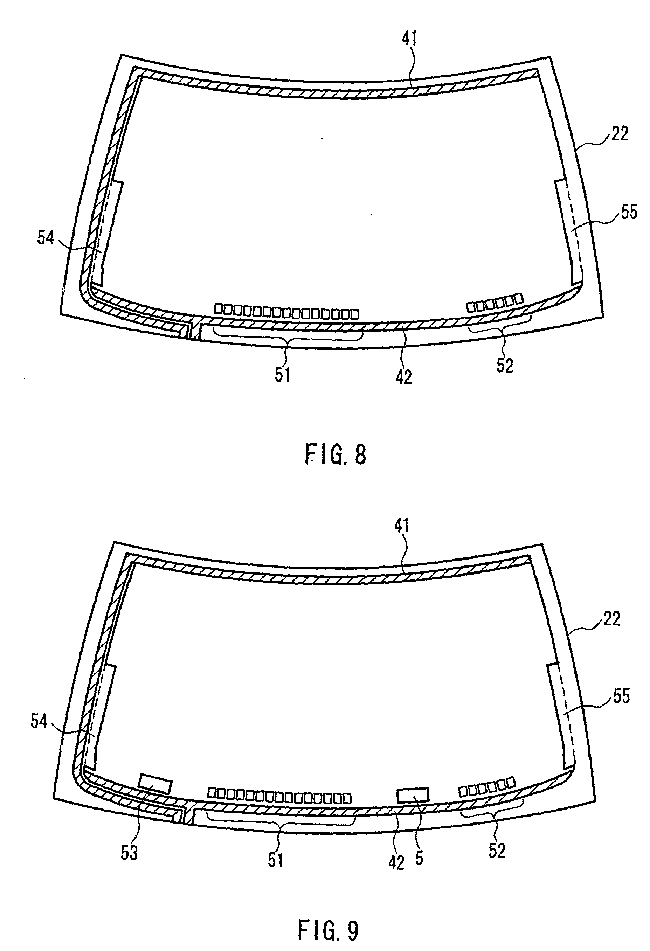

A means for concentrating an electric current in the wiper blade stopping areas 61 and 62 is not limited to the opening portions 5 and 53, but end portions of the film may be recessed. As shown in FIG. 8, when end portions of the transparent conductive film 3 each located between an end of the first bus bar 41 and an end of the second bus bar 42 are recessed, the electric current that flows through the wiper blade stopping places 61 and 62 increases relatively.

The recessed portions 54 and 55 each hinder the electric current from flowing along the shortest path between an end portion of the first bus bar 41 and that of the second bus bar 42. When this current is limited, the area of heat spots that appear in the vicinities of the end portions of the bus bars 41 and 42 in a current-carrying state can be reduced. It is convenient that as shown in the drawing, more specifically, the recessed portions 54 and 55 are formed with parts of the end portions of the transparent conductive film 3 each being recessed from the line joining an end of the first bus bar 41 and an end of the second bus bar 42.

The cause of generation of the heat spots also resides in that the first bus bar 41 located on the upper side is shorter than the second bus bar 42 located on the lower side and thereby the electric current concentrates in the vicinity of the first bus bar 41, particularly in the vicinities of its ends. It therefore is preferable that the recessed portions 54 and 55 are arranged so as to substantially limit the length of the second bus bar 42 located on the lower side.

Specifically, as shown in FIG. 8, it is preferable that the recessed portions 54 and 55 are arranged so that the distance between the second bus bar 42 located on the lower side of the windshield glass and respective lower-side ends of the recessed portions 54 and 55 is shorter than that between the first bus bar 41 located on the upper side and respective upper-side ends of the recessed portions 54 and 55. This arrangement allows heat spots that appear particularly in the vicinity of the bus bar located on the upper side to be reduced in size effectively.

As shown in FIG. 9, when the transparent conductive film 3 is provided with the opening portion groups 51 and 52, the opening portion 5 for passing electromagnetic waves, the additional opening portion 53, and the recessed portions 54 and 55, quick heating of wiper blades, transmission of electromagnetic waves, a uniform state of heat generation can be achieved simultaneously.

The recessed portions 54 and 55 may be formed to be in contact with the bus bar 41 or 42 (FIG. 8). The opening portion groups 51 and 52 and the opening portions 54 and 55 also may be formed to be in contact with the bus bar, corresponding to the wiper blade stopping places.

In the present specification, the term "opening portion" is used to denote opening portions of a conductive film that forms bus bars and a transparent conductive film. The opening portions therefore may be surrounded by a bus bar and the transparent conductive film.

In the above description, the opening portion 5 was described as a means for passing electromagnetic waves but the means is not limited thereto. The other opening portion 53 and the recessed portions 54 and 55 may be used for passing electromagnetic waves. Furthermore, the shape of the respective opening portions 5, 53, 511, 512,..., 521, 522,..., and recessed portions 54 and 55 is shown as a substantially rectangular shape but is not limited thereto.

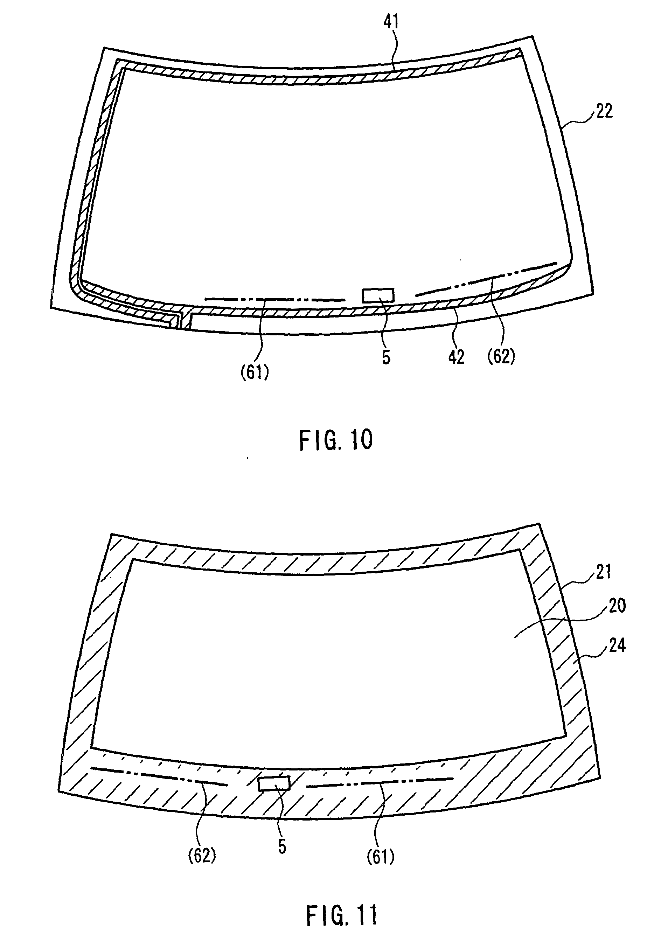

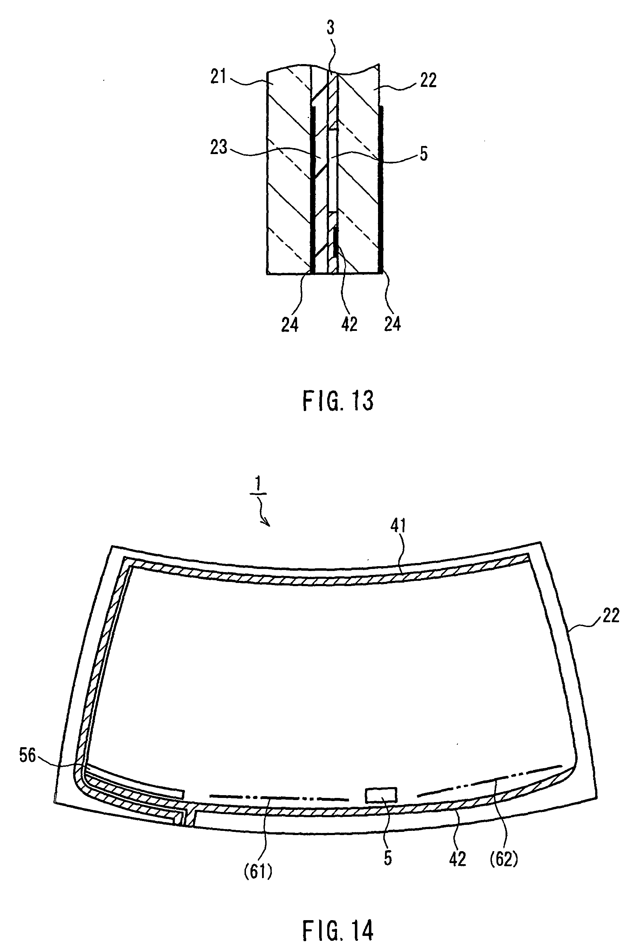

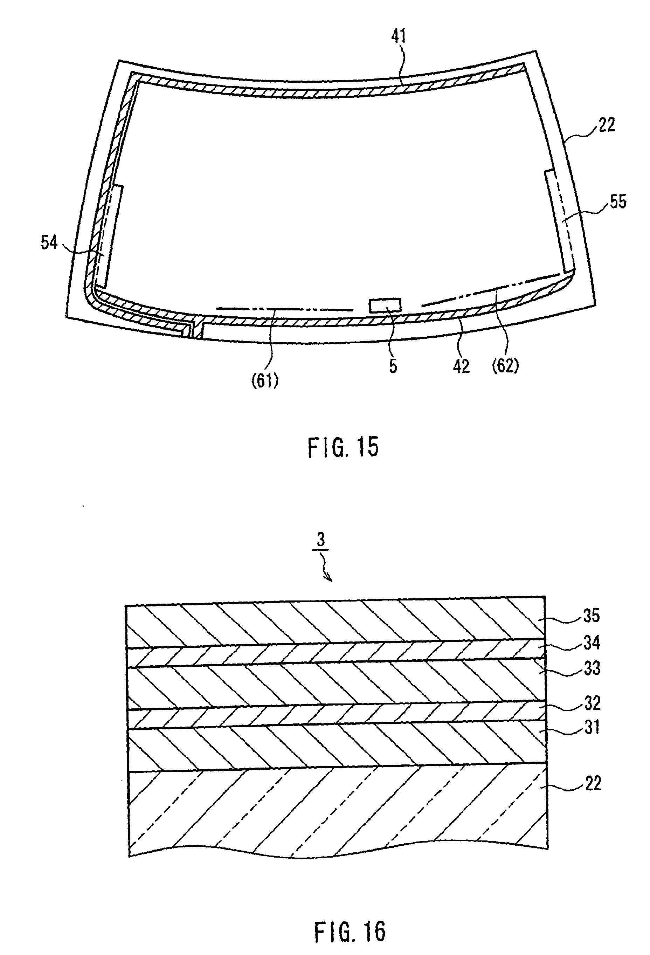

As shown in FIG. 10, even when only the opening portion 5 for passing electromagnetic waves is provided between the wiper blade stopping areas 61 and 62, the electric current that flows through the areas 61 and 62 increases relatively as compared to the state where the opening portion 5 is not provided. Since the electric current concentrates in the region of the transparent conductive film 3 surrounding the opening portion 5 for passing electromagnetic waves, local hot regions appear in the vicinity of the opening portion 5. However, in order to efficiently heat wiper blades that are in a stopped state, it is preferable that a further opening portion or recessed portion is added. A recessed portion 56 shown in FIG. 14 is an example thereof. In the present specification, the film-free portion provided for concentrating an electric current in the wiper blade stopping areas 61 and 62 includes not only the opening portions but also the recessed portions. As shown in FIG. 15, even when the recessed portions 54 and 55 are formed on both ends of the transparent conductive film 3 instead of the recessed portion 56, a similar effect of concentrating an electric current can be obtained.

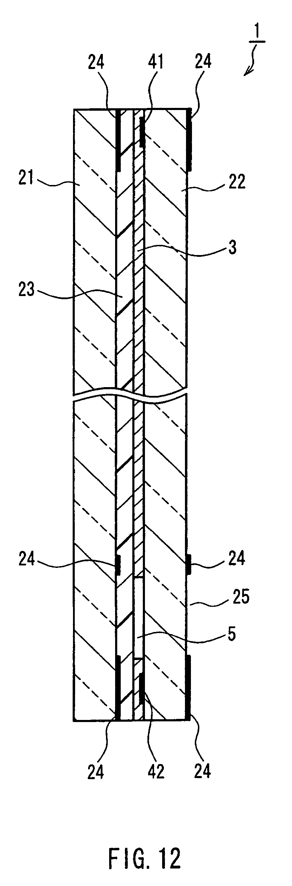

Similarly in this case, as shown in FIG. 12, it is convenient that the opening portion 5 for passing electromagnetic waves is arranged outside the vision area 20 surrounded by ceramic prints. The ceramic prints 24 are formed on the vehicle-interior side surfaces of the vehicle-interior side glass sheet 21 and the vehicle-exterior side glass sheet 22. The ceramic prints 24 each have an opening portion 25 that is formed in a place corresponding to that of the opening portion 5 for passing electromagnetic waves. However, as shown in FIG. 13, it is not necessary to form the opening portion 25 depending on the composition of the ceramic prints 24. As shown in FIG. 11, the vehicle-exterior side glass sheet 21 used in a combination with the vehicle-interior side glass sheet 22 shown in FIG. 10 is provided with the ceramic print 24 arranged in the frame-like form. In the non-vision area covered with the print 24 are arranged the opening portion 5 and the wiper blade stopping areas 61 and 62. The transparent conductive film 3 is formed on the whole surface of the vision area 20 surrounded by the print 24.

In a vehicle equipped with a wiper device (a concealed wiper) having a mechanism of housing wiper blades in places other than the places where the wiper blades stop, the wiper blade stopping areas 61 and 62 are determined depending on the positions where the wiper blades stop temporarily.

The transparent conductive film 3 is not particularly limited as long as it can carry an electric current and can achieve a high visible light transmittance (for instance, at least 70%, or at least 75% depending on locality) that is required for a windshield glass. A film known conventionally can be used satisfactorily as the transparent conductive film 3. One example of the transparent conductive film 3 that is suitable for the windshield glass is a multilayer film including a metal oxide layer and a metal layer. The metal oxide layer may be, for example, a zinc oxide layer, but an indium tin oxide (ITO) film is preferable. A silver-containing layer is suitable as the metal layer. As shown in FIG. 16, the multilayer film may be formed by stacking layers sequentially on a glass sheet 2 by, for example, a sputtering method. Preferable film thicknesses of the respective layers are indicated below.

| | |
|---|---|
| First metal oxide layer 31 | 20 to 40 nm |
| First metal layer 32 | 7 to 11 nm |
| Second metal oxide layer 33 | 60 to 100 nm |
| Second metal layer 34 | 7 to 11 nm |
| Third metal oxide layer 35 | 20 to 40 nm |

The film-free portion of the transparent conductive film 3 may be formed by masking at the time of film formation or etching after the film formation. The etching may be carried out using an etchant such as phosphoric acid.

The windshield glass of the present invention may be produced using a conventionally known process of manufacturing a laminated glass. For instance, it can be obtained by the method including the steps of:
a) cutting out two glass sheets with a predetermined shape from a large glass sheet;
b) polishing end faces of the two glass sheets;
c) printing a conductive film to serve as bus bars on a glass sheet to be used as a vehicle-interior glass sheet;
d) printing ceramic prints in peripheral portions of the two glass sheets;
e) placing the two glass sheets on top of each other and providing them with a predetermined bent shape by bending using their self-weight;
f) masking the vehicle-interior side glass sheet partially and then forming a transparent conductive film; and
g) bonding the two glass sheets to each other with a thermoplastic resin film (for instance, a polyvinyl butyral (PVB) film).

### Examples

### Film Formation Preliminary Experiment

On a 2-mm thick float glass sheet (clear glass) was formed each of three types of transparent conductive films each including three ITO layers and two silver (Ag) layers that were stacked alternately, under the conditions indicated in Table 1 using an in-line sputtering apparatus.

**Table 1**

| Samples | Conditions of Film Formation | ITO (1) | Ag (1) | ITO (2) | Ag (2) | ITO (3) |
|---|---|---|---|---|---|---|
| Film Configuration 1 | Ar Flow Rate (SCCM) | 98 | 98 | 98 | 98 | 98 |
| | O₂ Flow Rate (SCCM) | 10 | 0 | 10 | 0 | 10 |
| | Discharge Current (A) | 6 | 0.9 | 6 | 0.9 | 6 |
| | Design Film Thickness (nm) | 28 | 8 | 70 | 10 | 28 |
| Film Configuration 2 | Ar Flow Rate (SCCM) | 100 | 100 | 100 | 100 | 100 |
| | O₂ Flow Rate (SCCM) | 30 | 0 | 30 | 0 | 30 |
| | Discharge Current (A) | 30 | 15 | 30 | 15 | 30 |
| | Design Film Thickness (nm) | 40 | 7 | 100 | 9 | 40 |
| Film Configuration 3 | Ar Flow Rate (SCCM) | 100 | 100 | 100 | 100 | 100 |
| | O₂ Flow Rate (SCCM) | 30 | 0 | 30 | 0 | 30 |
| | Discharge Current (A) | 30 | 15 | 30 | 15 | 30 |
| | Design Film Thickness (nm) | 36 | 8 | 90 | 10 | 36 |
| * The numbers enclosed in brackets each indicate the sequence number of the layer concerned counted from the glass sheet side. | | | | | | |

Subsequently, each of the glass sheets with the respective films formed thereon was laminated with another 2-mm thick soda-lime glass sheet (green glass) using a polyvinyl butyral (PVB) film. Thus, each laminated glass was obtained (Samples 1 to 3). Furthermore, a clear glass with a film configuration 1 formed thereon was bonded to another 2-mm thick clear glass and thereby a laminated glass was obtained (Sample 4).

With respect to the laminated glasses thus obtained, their optical characteristics were determined. The results are shown in Table 2 together with those with respect to each sheet glass and laminated glass produced with no films formed therein.

**Table 2**

| | Visible Light Transmittance (%) | Solar Radiation Transmittance (%) | Color Tone | |
|---|---|---|---|---|
| | | | a* | b* |
| Sample 1 (Film Configuration 1) | 72.1 | 37.0 | -6.4 | 5.0 |
| Sample 2 (Film Configuration 2) | 72.4 | 37.8 | -5.1 | 3.7 |
| Sample 3 (Film Configuration 3) | 71.7 | 34.4 | -6.2 | 2.1 |
| Sample 4 (Film Configuration 1) | 76.5 | 40.0 | -4.1 | 2.9 |
| Green Glass (2 mm) | 85.3 | - | -2.9 | 0.4 |
| Clear Glass (2 mm) | 90.6 | - | -0.6 | 0.1 |
| Laminated (Green/PVB/Clear) | 83.7 | 62.2 | -3.9 | 1.2 |
| Laminated (Clear/PVB/Clear) | 88.8 | 76.7 | -1.3 | 0.3 |

| | | | | |
|---|---|---|---|---|
| * The color tone is indicated by the L*a*b* color system. | | | | |

As shown in Table 2, all the samples had a visible light transmittance of at least 70% and a solar radiation transmittance of 40% or lower. When consideration is given to the color tone of the laminated glass with no films formed therein, the films themselves caused less coloring and the transparent conductive films having the respective film configurations are in a range in which their colors can be said to be substantially neutral. The transparent conductive film having the film configuration 3 had a sheet resistance of about 4.2 Ω/square, and the transparent conductive films having the other configurations had a sheet resistance of about 4.0 Ω/square.

A heat generation test was carried out with respect to windshield glasses using the transparent conductive film having the film configuration 1 as follows.

In the following respective examples, opening portions 5 and 53 for passing electromagnetic waves had a size of 45 mm in the longitudinal direction and 90 mm in the width direction. Recessed portions 54 and 55 had a size of 330 mm in the longitudinal direction and 40 mm in the width direction. Each opening portion included in opening portion groups 51 and 52 had a size of 45 mm in the longitudinal direction and 22.5 mm in the width direction.

### Comparative Example

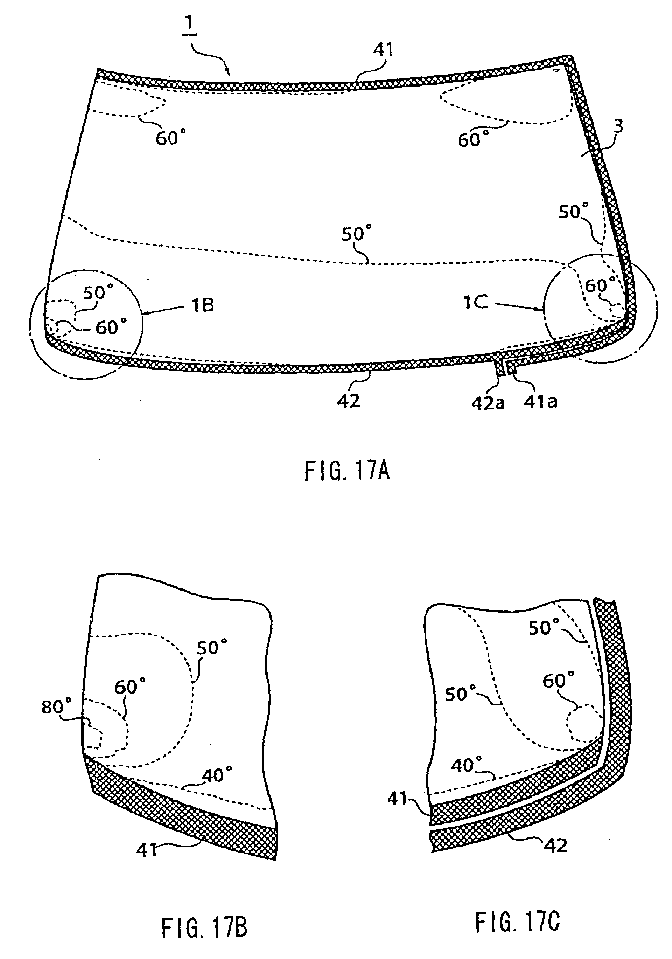

First, a voltage application test was carried out in the state where no film-free portion was formed. The resistance between bus bars was 2Ω. A voltage of 42 V was applied between the bus bars of the windshield and the state of heat generation was determined at room temperature (20°C). The results are shown in FIG. 17A. Enlarged views of vicinities of end portions of the lower-side bus bar 42 of the windshield are shown in FIGs. 17B and 17C, respectively.

As has been reported conventionally, heat spots were observed in the vicinities of the end portions of the upper-side bus bar 41. Heat spots also appeared in the vicinities of the end portions of the lower-side bus bar 42 although they were smaller than those observed in the vicinities of the end portions of the upper-side bus bar 41.

### Example 1

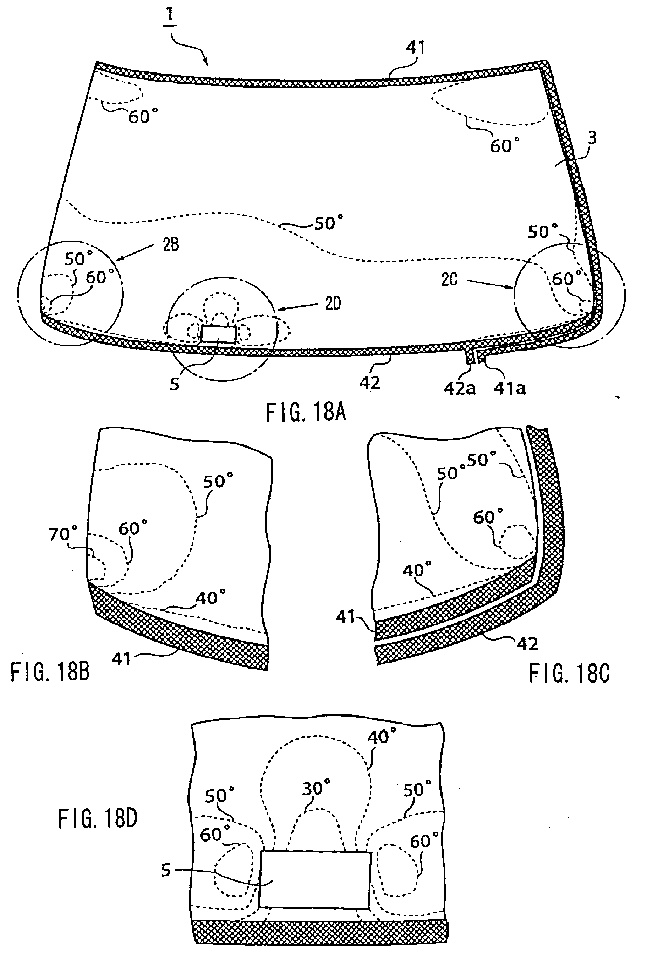

The state of heat generation was determined in the same manner as in the Comparative Example except that an opening portion was provided between wiper blade stopping areas. The results are shown in FIG. 18A. Enlarged views of vicinities 2B and 2C of end portions of the lower-side bus bar 42 of the windshield and a vicinity 2D of the opening portion 5 are shown in FIGs. 18B to 18D, respectively.

Hot regions appeared in the vicinity of the opening portion 5, and parts of this hot region extended toward the wiper blade stopping areas.

### Example 2

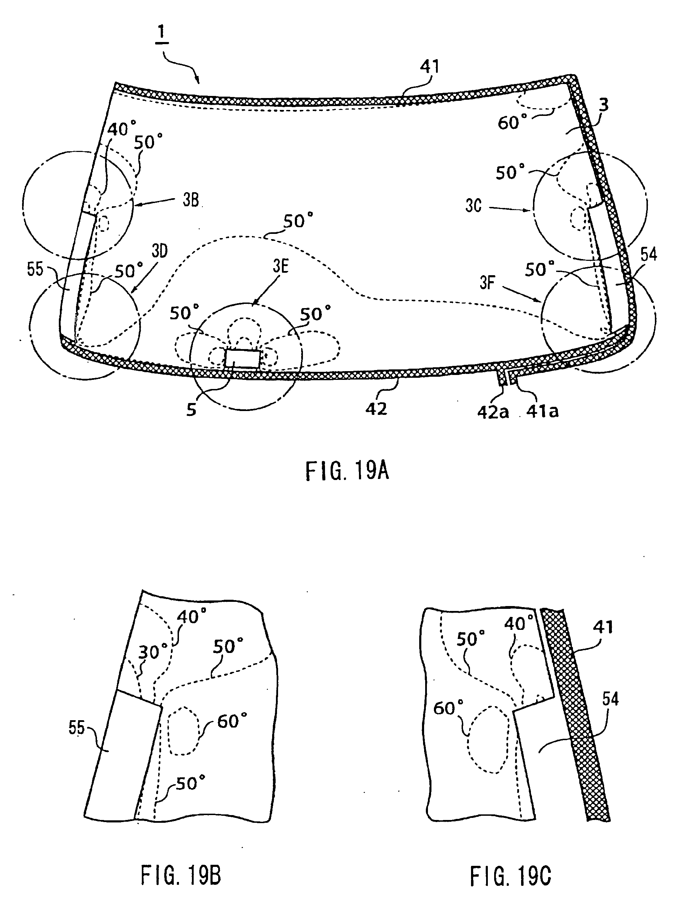

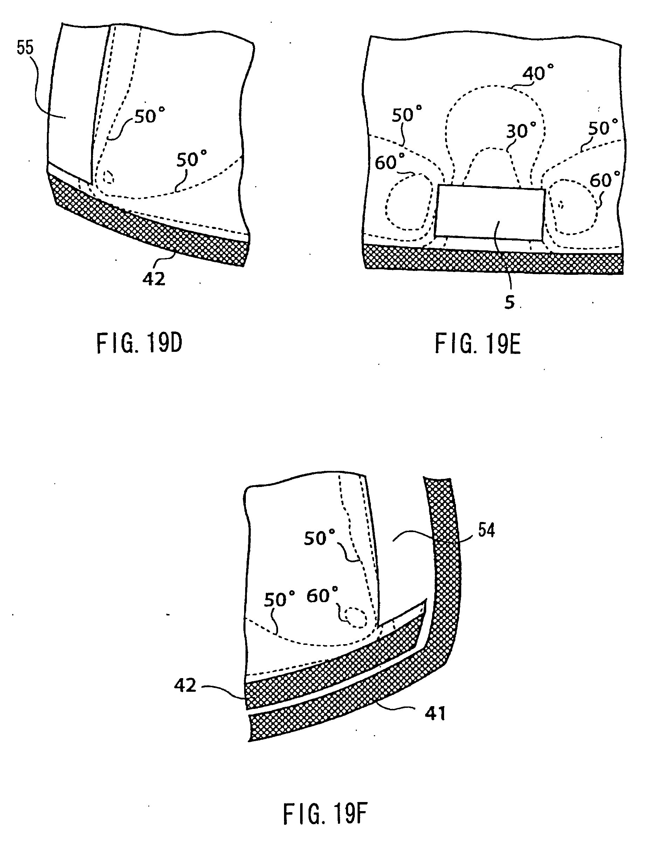

The state of heat generation was determined in the same manner as in the Comparative Example except that in addition to the opening portion 5 formed in Example 1, film-free portions 54 and 55 were provided for both end portions of the transparent conductive film 3. The results are shown in FIG. 19A. Enlarged views of end portions 3B to 3D and 3F of the film-free portions 54 and 55 and a vicinity 3E of the opening portion 5 are shown in FIGs. 19B to 19F, respectively.

The film-free portions 54 and 55 allowed the heat spots that appeared in the vicinity of the upper-side bus bar 41 to have a reduced size. Furthermore, the heat spots reaching extremely high temperature did not appear in the vicinity of the lower-side bus bar 42. Moreover, both ends of the isothermal line indicating 50°C located approximately in the middle of the glass moved downward as compared to those in Comparative Example (FIG. 17).

### Example 3

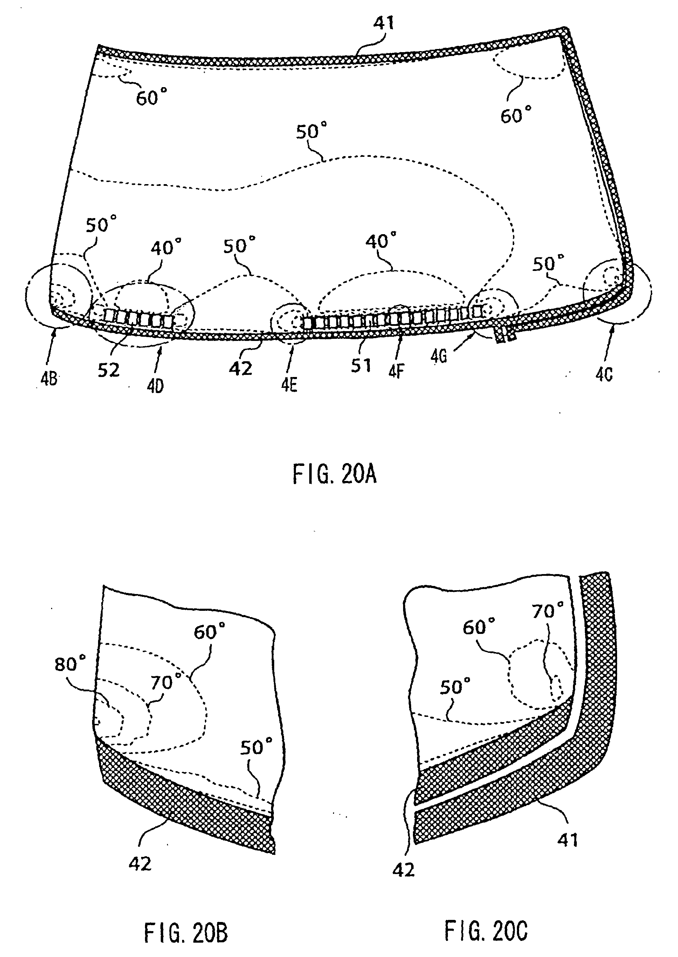

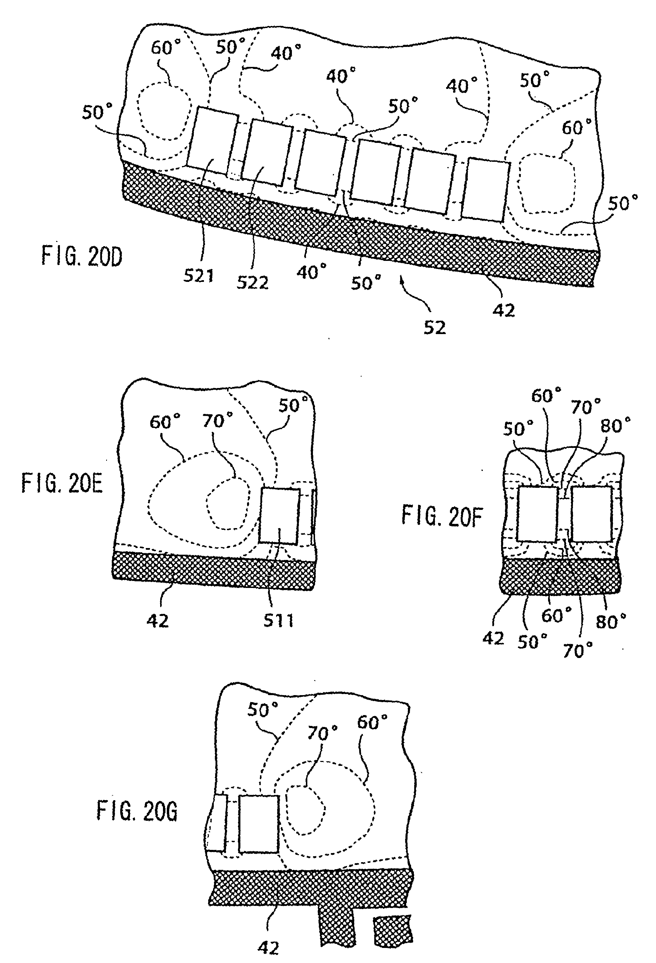

The state of heat generation was determined in the same manner as in the Comparative Example except that a plurality of opening portions were arranged along the wiper blade stopping areas. The results are shown in FIG. 20A. Enlarged views of vicinities 4B and 4C of end portions of the lower-side bus bar 42 and vicinities 4D to 4G of the opening portion groups 51 and 52 are shown in FIGs. 20B to 20G, respectively.

It can be observed that hot regions appeared between and around the opening portions of the opening portion groups 51 and 52. The opening portion groups 51 and 52 extending along the lower-side bus bar 42 limited the regions in which the bus bar 42 functions, and slightly reduced the size of the heat spots that appeared in the vicinity of the upper-side bus bar 41.

### Example 4

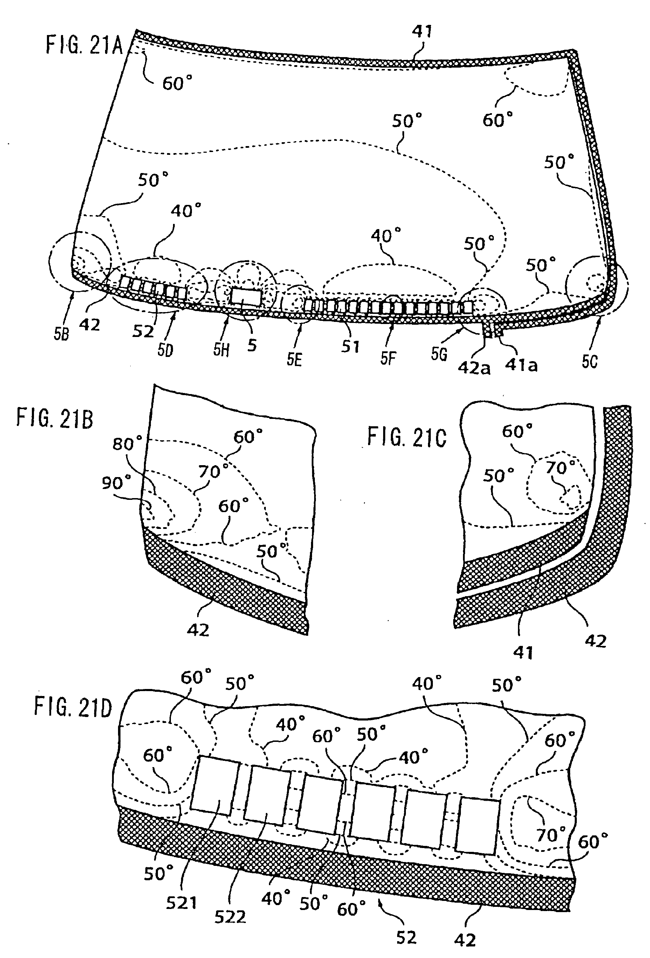

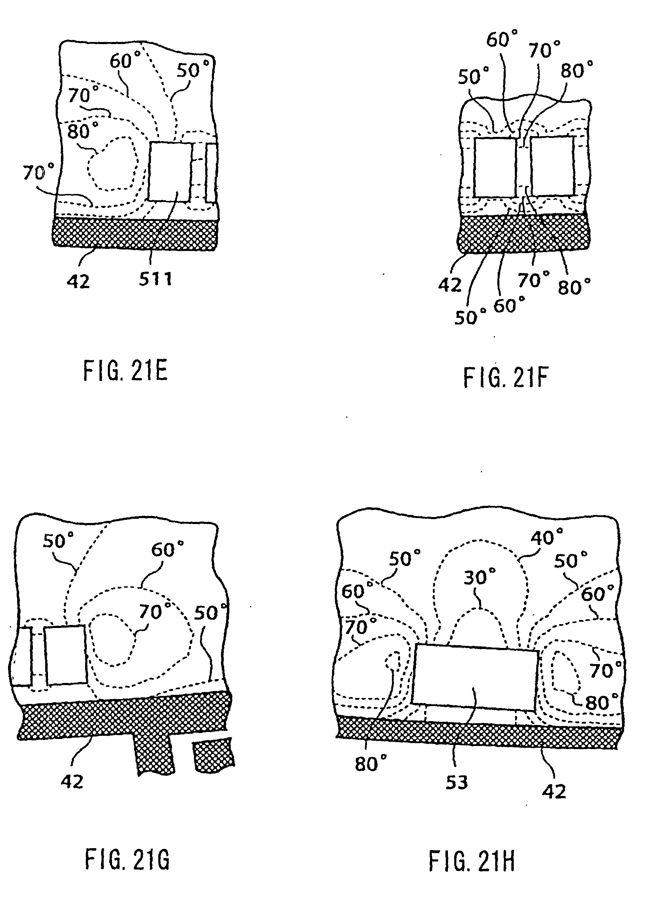

The state of heat generation was determined in the same manner as in the Comparative Example except that in addition to the opening portion groups 51 and 52 formed in Example 3, an opening portion 5 was provided between wiper blade stopping areas. The results are shown in FIG. 21A. Enlarged views of vicinities 5B and 5C of end portions of the lower-side bus bar 42, vicinities 5D to 5H of the opening portion groups 51 and 52, and a vicinity of the opening portion 5H are shown in FIGs. 21B to 21H, respectively.

### Example 5

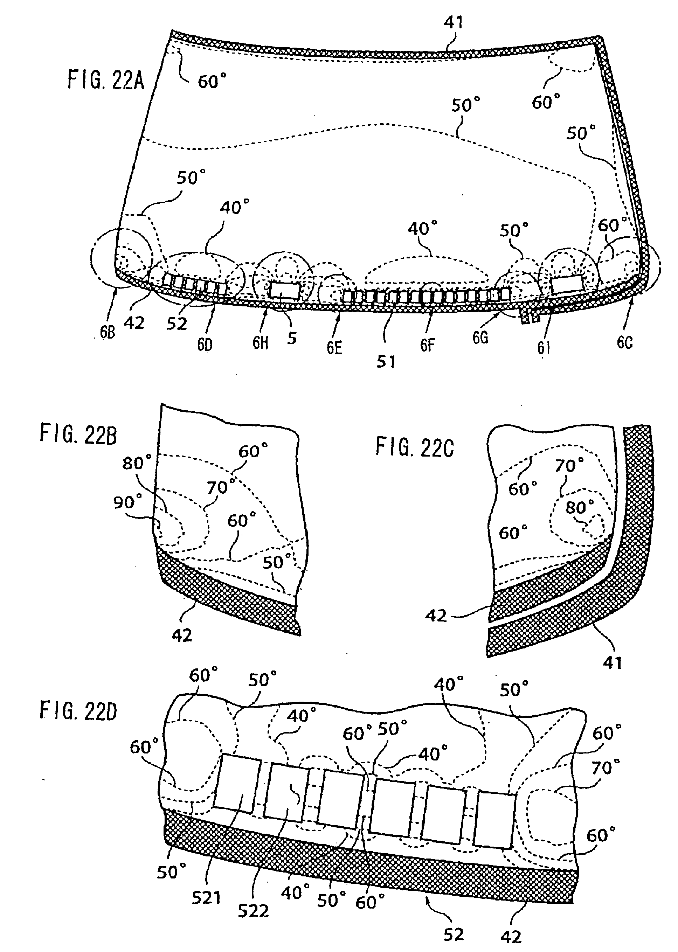

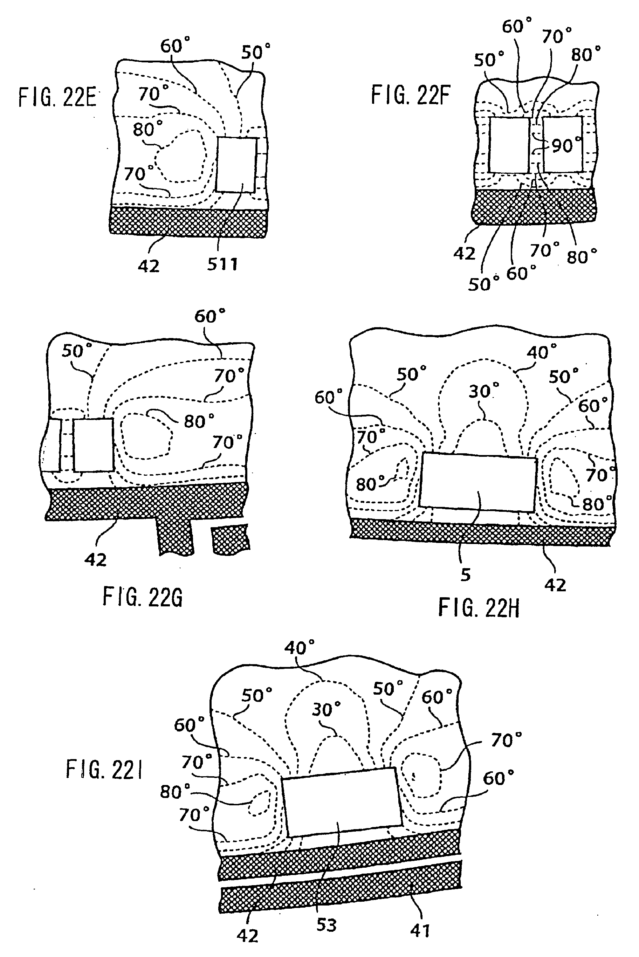

The state of heat generation was determined in the same manner as in the Comparative Example except that in addition to the opening portion groups 51 and 52 and the opening portion 5 formed in Example 4, another opening portion 53 was provided in the vicinity of a wiper blade stopping area. The results are shown in FIG. 22A. Enlarged views of vicinities 6B and 6C of end portions of the lower-side bus bar 42, vicinities 6D to 6G of the opening portion groups 51 and 52, and vicinities 6H and 6I of the opening portions 5 and 53 are shown in FIGs. 22B to 22I, respectively.

### Example 6

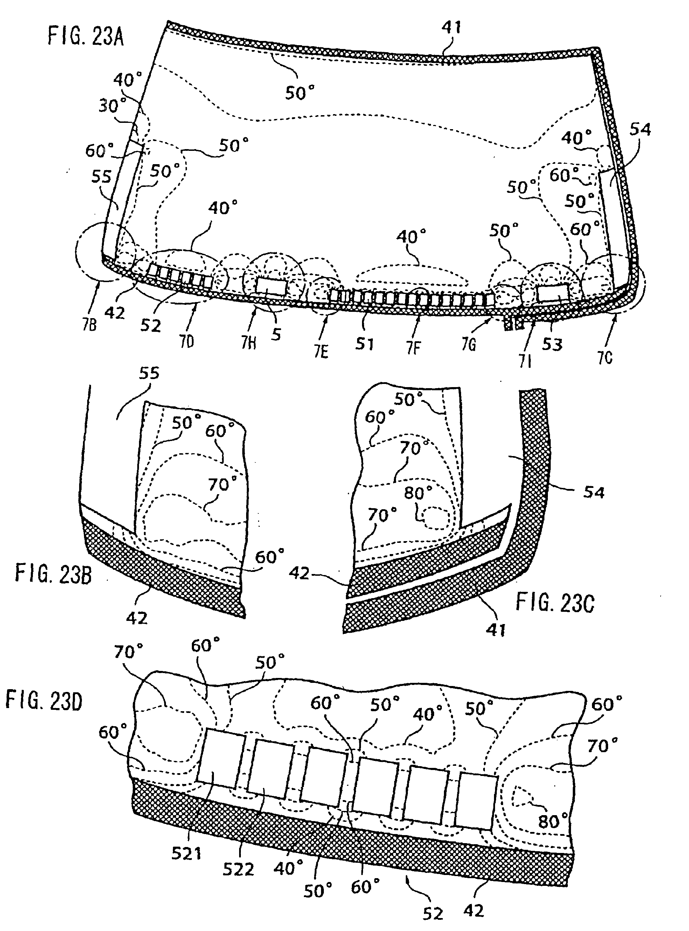

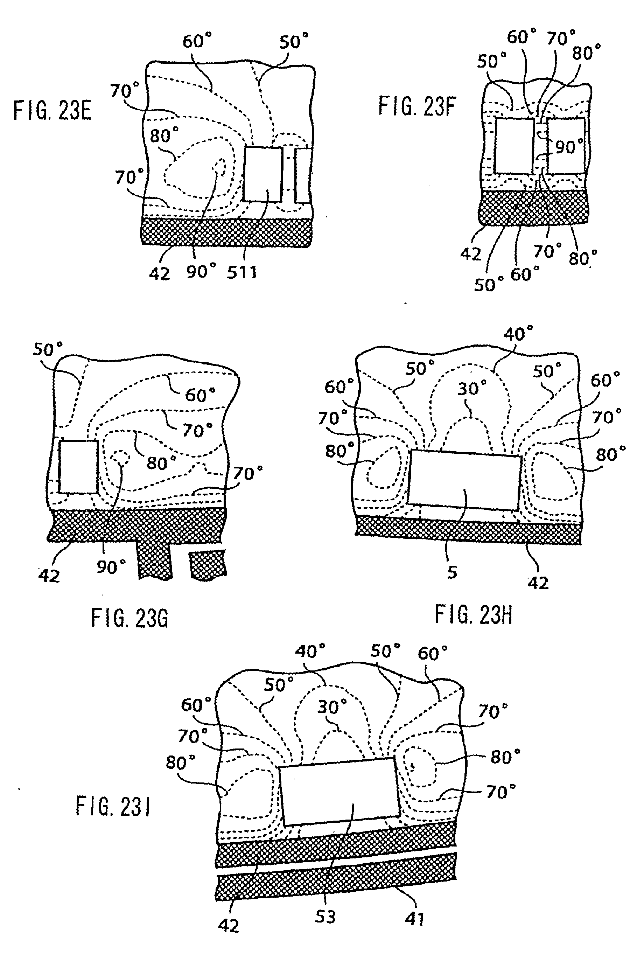

The state of heat generation was determined in the same manner as in the Comparative Example except that in addition to the opening portion groups 51 and 52 and the opening portions 5 and 53 formed in Example 5, further film-free portions 54 and 55 were provided in the vicinities of the wiper blade stopping areas. The results are shown in FIG. 23A. Enlarged views of vicinities 7B and 7C of end portions of the lower-side bus bar 42, vicinities 7D to 7G of the opening portion groups 51 and 52, and vicinities 7H and 7I of the opening portions 5 and 53 are shown in FIGs. 23B to 23I, respectively. It can be confirmed that no heat spots appeared in the vicinity of the upper-side bus bar 41.

## Claims

1. A windshield glass comprising: at least two glass sheets bonded to each other with a thermoplastic resin film interposed therebetween; a transparent conductive film formed on one main surface of one of the glass sheets; and bus bars formed on the one main surface for feeding electricity to the transparent conductive film,
wherein the transparent conductive film comprises at least one film-free portion in which the transparent conductive film is not formed, the at least one film-free portion being arranged so as to lie in at least a part of a wiper blade stopping area on the windshield glass or being arranged in the vicinity of the area, and
wherein the at least one film-free portion is arranged so that an amount of current passing through a unit area of the transparent conductive film increases at least at a part of the wiper blade stopping area as compared with a case of the absence of the at least one film-free portion.

2. The windshield glass according to claim 1, wherein the at least one film-free portion comprises a film-free portion arranged in an area covered with a ceramic print that is formed on one main surface of one of the glass sheets.

3. The windshield glass according to claim 2, wherein the transparent conductive film is formed at least on an entire surface of an area surrounded by the ceramic print.

4. The windshield glass according to claim 1, wherein the at least one film-free portion comprises a plurality of film-free portions arranged along a longitudinal direction of the wiper blade stopping area.

5. The windshield glass according to claim 1, wherein the at least one film-free portion comprises a film-free portion arranged so as to lie on a line obtained by virtually extending the wiper blade stopping area in a longitudinal direction thereof.

6. The windshield glass according to claim 1, wherein the windshield glass comprises a pair of wiper blade stopping areas, and wherein the at least one film-free portion comprises a film-free portion arranged between the pair of wiper blade stopping areas.

7. The windshield glass according to claim 1, wherein the at least one film-free portion comprises a film-free portion having an area of at least 9 cm².

8. The windshield glass according to claim 1, wherein the at least one film-free portion comprises a recessed portion formed by recessing a part of an end portion of the transparent conductive film located between the bus bars inwardly from a virtual line joining end portions of the bus bars.

9. The windshield glass according to claim 8, wherein a distance between a bus bar located on a lower side of the windshield glass and an end portion of the recessed portion located on the lower side is shorter than a distance between a bus bar located on an upper side of the windshield glass and an end portion of the recessed portion located on the upper side.

10. The windshield glass according to claim 1, wherein the transparent conductive film comprises: a first metal oxide layer with a film thickness of 20 nm to 40 nm; a first metal layer with a film thickness of 7 nm to 11 nm; a second metal oxide layer with a film thickness of 60 nm to 100 nm; a second metal layer with a film thickness of 7 nm to 11 nm; and a third metal oxide layer with a film thickness of 20 nm to 40 nm, which are stacked sequentially on the one main surface.

11. A windshield glass comprising: at least two glass sheets bonded to each other with a thermoplastic resin film interposed therebetween; a transparent conductive film formed on one main surface of one of the glass sheets; and bus bars formed on the one main surface for feeding electricity to the transparent conductive film,
wherein the transparent conductive film comprises at least one film-free portion in which the transparent conductive film is not formed, the at least one film-free portion serving as an electromagnetic wave passing portion and being arranged outside an area surrounded by a ceramic print that is formed on one main surface of one of the glass sheets.

12. The windshield glass according to claim 11, wherein the transparent conductive film is formed at least on an entire surface of the area.

13. The windshield glass according to claim 11, wherein the at least one film-free portion comprises a film-free portion having an area of at least 9 cm².

14. The windshield glass according to claim 11, wherein the transparent conductive film comprises a recessed portion formed by recessing a part of an end portion of the transparent conductive film located between the bus bars inwardly from a virtual line joining end portions of the bus bars.

15. The windshield glass according to claim 14, wherein a distance between a bus bar located on a lower side of the windshield glass and an end portion of the recessed portion located on the lower side is shorter than a distance between a bus bar located on an upper side of the windshield glass and an end portion of the recessed portion located on the upper side.

16. The windshield glass according to claim 11, wherein the transparent conductive film comprises: a first metal oxide layer with a film thickness of 20 nm to 40 nm; a first metal layer with a film thickness of 7 nm to 11 nm; a second metal oxide layer with a film thickness of 60 nm to 100 nm; a second metal layer with a film thickness of 7 nm to 11 nm; and a third metal oxide layer with a film thickness of 20 nm to 40 nm, which are stacked sequentially on the one main surface.

17. A windshield glass comprising: at least two glass sheets bonded to each other with a thermoplastic resin film interposed therebetween; a transparent conductive film formed on one main surface of one of the glass sheets; and bus bars formed on the one main surface for feeding electricity to the transparent conductive film,
wherein the transparent conductive film comprises a recessed portion formed by recessing a part of an end portion of the transparent conductive film located between the bus bars inwardly from a virtual line joining end portions of the bus bars.

18. The windshield glass according to claim 17, wherein a distance between a bus bar located on a lower side of the windshield glass and an end portion of the recessed portion located on the lower side is shorter than a distance between a bus bar located on an upper side of the windshield glass and an end portion of the recessed portion located on the upper side.

19. The windshield glass according to claim 17, wherein the transparent conductive film comprises: a first metal oxide layer with a film thickness of 20 nm to 40 nm; a first metal layer with a film thickness of 7 nm to 11 nm; a second metal oxide layer with a film thickness of 60 nm to 100 nm, a second metal layer with a film thickness of 7 nm to 11 nm; and a third metal oxide layer with a film thickness of 20 nm to 40 nm, which are stacked sequentially on the one main surface.
